# EUROPEAN PATENT SPECIFICATION

(11) **EP 3 617 303 B1**
(45) Date of publication and mention of the grant of the patent: **01.07.2026**
(21) Application number: 18790630.0
(22) Date of filing: 24.04.2018
(51) Int. Cl.: C12G 3/04, C12G 3/024, C12G 3/06, C12G 3/08, C12G 1/06

(54) **COMPOSITION COMPRISING VERMOUTH WITH CARBON DIOXIDE**
ZUSAMMENSETZUNG, UMFASSEND WERMUT MIT KOHLENDIOXID
COMPOSITION DE VERMOUT AVEC GAZ CARBONIQUE

(30) Priority: 25.04.2017 ES 201700392 U
(43) Date of publication of application: 04.03.2020
(73) Proprietor: Destilerias Manuel Acha Fabrica De Licores, S.A., 01479 Amurrio (Álava) (ES)
(72) Inventor: ACHA GONZALEZ, Gabriel, 01479 Amurrio (Álava) (ES)
(74) Representative: Juncosa Miró, Jaime
(86) International application number: PCT/ES2018/070324
(87) International publication number: WO 2018/197735

(56) References cited:
- WO-A2-2008/012857
- ES-A1- 0 178 196
- ES-A1- 2 070 091
- ES-A1- 2 070 091
- JULIA TUNSTALL: "Campari soda", 9 February 2017 (2017-02-09), XP002798276, Retrieved from the Internet <URL:https://abarabove.com/recipe/campari-soda/> [retrieved on 20200312]
- "Cinzano Soda", 21 June 2013 (2013-06-21), XP002798277, Retrieved from the Internet <URL:http://upknorth.com/blog/cinzano-soda> [retrieved on 20200312]
- "La Casera democratiza el vermut con ''El Vermudez"", PROFESIONAL HORECA, 21 June 2016 (2016-06-21), XP055527244, Retrieved from the Internet <URL:http://profesionalhoreca.com/la-casera-democratiza-vermut-vermudez> [retrieved on 20180906]
- "Martonic", LA COCINA DE REBECA, 6 March 2016 (2016-03-06), XP055527250, Retrieved from the Internet <URL:http://www.lacocinaderebeca.es/2016/03/martonic.html> [retrieved on 20180906]
- "Reglamento (CEE) Num. 1601/91 del Consejo", REGLAMENTO DEL PARLAMENTO EUROPEO Y DEL CONSEJO, 10 June 1991 (1991-06-10), pages 1 - 18, XP055527258

## Description

### Field of the Art

The object of the present invention is a vermouth composition with carbon dioxide (CO₂) contents in specific proportions. The vermouth belongs to the industrial sector of aromatized wine-based beverages and consists of aromatized wine having specific characteristics determined by a regulation. The composition of the present invention is presented such that it is bottled in an air-tight container and its original, characteristic composition gives rise to completely novel flavors, sensations, and tastes in relation to what is conventionally known as vermouth.

### Background of the Invention

Today, there are many beverages that are combined with carbon dioxide (CO₂) and they are conventionally known as soft drinks and other similar varieties. There are also bottled wines with added carbon dioxide (CO₂), such as aerated wines, or wines bottled with carbon dioxide (CO₂) contents originating from the fermentation of the wine itself in the bottle, such as sparkling wines or the like, but the inventors are unaware of the prior usage or disclosure of vermouth, which is an aromatized wine bottled with carbon dioxide (CO₂) contents in proportions which, while respecting the vermouth base, result in a new completely novel combination, providing tastes, sensations, and flavors never heard of before.

As defined in Council Regulation (EEC) No 1601/91 of 10 June 1991, vermouth is an aromatized wine which has been prepared from wine as referred to in the same regulation, the characteristic taste of which is obtained by the use of appropriate derived substances, in particular of the Artemisia species, which must always be used; the sweetening of which is obtained only by means of using caramelized sugar, and/or sucrose, and/or grape must, and/or rectified concentrated grape must, and/or concentrated grape must.

It is known that conventional vermouth is marketed in bottles and it is mixed with carbonated water, known as soda or club soda, before serving, for example as explained in
https://abarabove.com/recipe/campari-soda/ and
https://web.archive.org/web/20131207133519/http://upknorth.com/blog/cinzano-soda.
ES2070091A1

However, so far the inventor is unaware of the inclusion of carbon dioxide in the vermouth itself and the preservation thereof in bottles. By means of such proposal, the resulting composition remains as vermouth and new flavor and sensations are provided.

### Summary of the Invention

The object of the present invention is a vermouth composition with carbon dioxide (CO₂) in which the carbon dioxide (CO₂) is in a proportion between 1 gram per liter of vermouth and 10 grams per liter of vermouth, preferably between 3 grams per liter of vermouth and 7 grams per liter of vermouth, and more preferably between 4 grams per liter of vermouth and 6 grams per liter of vermouth. It has been found that carbon dioxide (CO₂) in these proportions not only does not cause the deterioration of the aromas of the vermouth, but rather highlights its qualities, giving rise to completely new flavors, sensations, and tastes in relation to vermouth alone or vermouth served mixed with carbonated water.

Therefore, the vermouth composition with carbon dioxide (CO₂) of the present invention can be preserved such that it is bottled in an air-tight container for a relatively long time period and can be consumed by pouring it out directly from the bottle without having to add other products thereto.

Vermouth, which is the base component of the composition of the present invention, is an aromatized wine obtained from one or more wine products:
A) which have, added therein, grape musts and/or partially fermented grape musts, which can be an object of alcohol addition, and have been aromatized by means of: -natural aromatizing substances and/or aromatizing preparations- aromatic herbs and/or spices and/or flavoring foodstuffs;
B) which have been complemented with a sweetening agent, with a few exceptions, such as dyeing with caramel;
C) which actual alcoholic strength by volume is 14.5% to 22%, and minimum total alcoholic strength by volume is 17.5%.
D) with wines or fresh grape musts with fermentation arrested by alcohol present in the end product in a proportion not less than 75% by volume;
E) with the characteristic taste obtained by the use of appropriate derived substances, in particular of the Artemisia species, which must always be used;
F) which have been sweetened only by means of using caramelized sugar, sucrose, grape must, rectified concentrated grape must, and concentrated grape must.

Once the vermouth with the basic characteristics described above has been obtained, carbon dioxide (CO₂) is introduced therein in said proportion between 1 gram per liter and 10 grams per liter, and advantageously in the other two smaller proportions indicated above. The composition that is obtained can be preserved in bottles. The operation of mixing the carbon dioxide (CO₂) with the vermouth can be performed before or during bottling.

### Detailed Description of an Embodiment

In view of the above, the present invention relates to a composition made up of vermouth with carbon dioxide in a proportion between 1 gram of carbon dioxide (CO₂) per liter of vermouth and 10 grams of carbon dioxide (CO₂) per liter of vermouth. Preferably, the proportion of the composition is between 3 grams of carbon dioxide (CO₂) per liter of vermouth and 7 grams of carbon dioxide (CO₂) per liter of vermouth. More preferably, the proportion of the composition is between 4 grams of carbon dioxide (CO₂) per liter of vermouth and 6 grams of carbon dioxide (CO₂) per liter of vermouth. The composition can be made at the most appropriate and convenient time for the preservation thereof bottled in an air-tight container.

To preserve the bottled composition, any one of the bottling techniques that are well known in the art of the sector can be used, and the operation of adding carbon dioxide (CO₂) to the vermouth can be performed before or during bottling, according to needs and the end consumer of the composition.

## Claims

1. A vermouth composition **characterized in that** the composition consists of vermouth and carbon dioxide (CO₂), wherein the carbon dioxide (CO₂) is present in the composition in a proportion between 1 gram per liter of vermouth and 10 grams per liter of vermouth.

2. The vermouth composition according to claim 1, wherein the composition is bottled in an air-tight container.

3. The vermouth composition according to claim 1 or 2, wherein the carbon dioxide (CO₂) is in a proportion between 3 grams per liter of vermouth and 7 grams per liter of vermouth.

4. The vermouth composition according to claim 1 or 2, wherein the carbon dioxide (CO₂) is in a proportion between 4 grams per liter of vermouth and 6 grams per liter of vermouth.

5. The vermouth composition according to claim 1, wherein the vermouth comprises wine aromatized by means of using substances derived from Artemisia species.

6. The vermouth composition according to claim 1, wherein the vermouth comprises wine sweetened by means of using one or more of the following products: caramelized sugar; sucrose; grape must; rectified concentrated grape must; and concentrated grape must.

7. A method for obtaining a vermouth composition according to any one of claims 1 to 6, which comprises preparing vermouth by means of the steps of:
providing one or more wine products;
adding unfermented grape must and/or partially fermented grape must with fermentation arrested by alcohol to the one or more wine products in a proportion equal to or greater than 75% by volume, providing an actual alcoholic strength by volume of 14.5% to 22%; and
aromatizing the one or more wine products mixed with the grape must added with natural aromatizing substances and/or aromatizing preparations and/or aromatic herbs and/or spices and/or flavoring foodstuffs, including in any case Artemisia species;
wherein the vermouth that is obtained has a total alcoholic strength by volume equal to or greater than 17.5%;
the method being **characterized by** comprising the additional step of:
introducing carbon dioxide (CO₂) to the vermouth that is obtained in a proportion between 1 gram per liter of vermouth and 10 grams per liter of vermouth.

8. The method for obtaining a vermouth composition according to claim 7, wherein the carbon dioxide (CO₂) is introduced in a proportion between 3 grams per liter of vermouth and 7 grams per liter of vermouth.

9. The method for obtaining a vermouth composition according to claim 7, wherein the carbon dioxide (CO₂) is introduced in a proportion between 4 grams per liter of vermouth and 6 grams per liter of vermouth.

10. The method for obtaining a vermouth composition according to claim 7, which further comprises sweetening the one or more wine products mixed with the grape must and aromatized with caramelized sugar, and/or sucrose, and/or grape must, and/or rectified concentrated grape must, and/or concentrated grape must.

11. The method for obtaining a vermouth composition according to claim 7, which further comprises bottling the vermouth composition in an airtight container.

12. The method for obtaining a vermouth composition according to claim 11, wherein the operation of introducing carbon dioxide (CO₂) to the vermouth is performed before the bottling operation.

13. The method for obtaining a vermouth composition according to claim 11, wherein the operation of introducing carbon dioxide (CO₂) to the vermouth is performed during the bottling operation.

## Patentansprüche

1. Wermutzusammensetzung, **dadurch gekennzeichnet, dass** die Zusammensetzung aus Wermut und Kohlendioxid (CO₂) besteht, wobei das Kohlendioxid (CO₂) in der Zusammensetzung in einem Anteil zwischen 1 Gramm pro Liter Wermut und 10 Gramm pro Liter Wermut vorliegt.

2. Wermutzusammensetzung nach Anspruch 1, wobei die Zusammensetzung in einen luftdichten Behälter abgefüllt wird.

3. Wermutzusammensetzung nach Anspruch 1 oder 2, wobei das Kohlendioxid (CO₂) in einem Anteil zwischen 3 Gramm pro Liter Wermut und 7 Gramm pro Liter Wermut vorliegt.

4. Wermutzusammensetzung nach Anspruch 1 oder 2, wobei das Kohlendioxid (CO₂) in einem Anteil zwischen 4 Gramm pro Liter Wermut und 6 Gramm pro Liter Wermut vorliegt.

5. Wermutzusammensetzung nach Anspruch 1, wobei der Wermut Wein umfasst, der unter Verwendung von Substanzen aus *Artemisia-*Arten aromatisiert ist.

6. Wermutzusammensetzung nach Anspruch 1, wobei der Wermut Wein umfasst, der unter Verwendung eines oder mehrerer der folgenden Produkte gesüßt ist: karamellisierter Zucker; Saccharose; Traubenmost; rektifizierter konzentrierter Traubenmost; und konzentrierter Traubenmost.

7. Verfahren zum Erhalten einer Wermutzusammensetzung nach einem der Ansprüche 1 bis 6, das die Herstellung von Wermut mittels der folgenden Schritte umfasst:
Bereitstellen eines oder mehrerer Weinprodukte;
Hinzufügen von unvergorenem Traubenmost und/oder teilweise vergorenem Traubenmost, bei dem die Gärung durch Alkohol gestoppt wird, zu dem einen oder den mehreren Weinprodukten in einem Anteil von gleich oder mehr als 75 Vol.-%, wobei ein tatsächlicher Alkoholgehalt von 14,5 % bis 22 Vol.-% bereitgestellt wird; und
Aromatisieren des einen oder der mehreren Weinprodukte, die mit dem hinzugefügten Traubenmost vermischt sind, mit natürlichen Aromastoffen und/oder Aromazubereitungen und/oder aromatischen Kräutern und/oder Gewürzen und/oder aromatisierenden Lebensmitteln, die in jedem Fall *Artemisia-*Arten enthalten;
wobei der erhaltene Wermut einen Gesamtalkoholgehalt von gleich oder mehr als 17,5 % Vol. aufweist;
wobei das Verfahren **dadurch gekennzeichnet ist, dass** es den folgenden zusätzlichen Schritt umfasst: Einführen von Kohlendioxid (CO₂) in den erhaltenen Wermut in einem Anteil zwischen 1 Gramm pro Liter Wermut und 10 Gramm pro Liter Wermut.

8. Verfahren zum Erhalten einer Wermutzusammensetzung nach Anspruch 7, wobei das Kohlendioxid (CO₂) in einem Anteil zwischen 3 Gramm pro Liter Wermut und 7 Gramm pro Liter Wermut eingeführt wird.

9. Verfahren zum Erhalten einer Wermutzusammensetzung nach Anspruch 7, wobei das Kohlendioxid (CO₂) in einem Anteil zwischen 4 Gramm pro Liter Wermut und 6 Gramm pro Liter Wermut eingeführt wird.

10. Verfahren zum Erhalten einer Wermutzusammensetzung nach Anspruch 7, das ferner das Süßen des einen oder der mehreren Weinprodukte umfasst, die mit dem Traubenmost vermischt und mit karamellisiertem Zucker und/oder Saccharose und/oder Traubenmost und/oder rektifiziertem konzentriertem Traubenmost und/oder konzentriertem Traubenmost aromatisiert sind.

11. Verfahren zum Erhalten einer Wermutzusammensetzung nach Anspruch 7, das ferner das Abfüllen der Wermutzusammensetzung in einen luftdichten Behälter umfasst.

12. Verfahren zum Erhalten einer Wermutzusammensetzung nach Anspruch 11, wobei der Vorgang des Einführens von Kohlendioxid (CO₂) in den Wermut vor dem Abfüllvorgang durchgeführt wird.

13. Verfahren zum Erhalten einer Wermutzusammensetzung nach Anspruch 11, wobei der Vorgang des Einführens von Kohlendioxid (CO₂) in den Wermut während des Abfüllvorgangs durchgeführt wird.

## Revendications

1. Composition de vermouth **caractérisée en ce que** la composition est constituée de vermouth et de dioxyde de carbone (CO₂), dans laquelle le dioxyde de carbone (CO₂) est présent dans la composition dans une proportion comprise entre 1 gramme par litre de vermouth et 10 grammes par litre de vermouth.

2. Composition de vermouth selon la revendication 1, dans laquelle la composition est mise en bouteille dans un récipient étanche à l'air.

3. Composition de vermouth selon la revendication 1 ou 2, dans laquelle le dioxyde de carbone (CO₂) est présent dans une proportion comprise entre 3 grammes par litre de vermouth et 7 grammes par litre de vermouth.

4. Composition de vermouth selon la revendication 1 ou 2, dans laquelle le dioxyde de carbone (CO₂) est présent dans une proportion comprise entre 4 grammes par litre de vermouth et 6 grammes par litre de vermouth.

5. Composition de vermouth selon la revendication 1, dans laquelle le vermouth comprend un vin aromatisé au moyen de l'utilisation de substances dérivées d'espèces d'Artemisia.

6. Composition de vermouth selon la revendication 1, dans laquelle le vermouth comprend un vin édulcoré au moyen de l'utilisation d'un ou plusieurs des produits suivants : sucre caramélisé ; saccharose ; moût de raisin ; moût de raisin concentré rectifié ; et moût de raisin concentré.

7. Procédé d'obtention d'une composition de vermouth selon l'une quelconque des revendications 1 à 6, comprenant la préparation de vermouth au moyen des étapes consistant à :
fournir un ou plusieurs produits vinicoles ;
ajouter du moût de raisin non fermenté et/ou du moût de raisin partiellement fermenté dont la fermentation est arrêtée par l'alcool au(x)dit(s) produit(s) vinicole(s) dans une proportion égale ou supérieure à 75 % en volume, en conférant un titre alcoométrique volumique acquis de 14,5 % à 22 % ; et
aromatiser le ou les produits vinicoles mélangés avec le moût de raisin ajouté au moyen de substances aromatisantes naturelles et/ou de préparations aromatisantes et/ou d'herbes aromatiques et/ou d'épices et/ou de denrées alimentaires aromatisantes, comprenant dans tous les cas des espèces d'Artemisia ;
dans lequel le vermouth obtenu présente un titre alcoométrique volumique total égal ou supérieur à 17,5 % ;
ledit procédé étant **caractérisé en ce qu'**il comprend l'étape supplémentaire consistant à : introduire du dioxyde de carbone (CO₂) dans le vermouth obtenu dans une proportion comprise entre 1 gramme par litre de vermouth et 10 grammes par litre de vermouth.

8. Procédé d'obtention d'une composition de vermouth selon la revendication 7, dans lequel le dioxyde de carbone (CO₂) est introduit dans une proportion comprise entre 3 grammes par litre de vermouth et 7 grammes par litre de vermouth.

9. Procédé d'obtention d'une composition de vermouth selon la revendication 7, dans lequel le dioxyde de carbone (CO₂) est introduit dans une proportion comprise entre 4 grammes par litre de vermouth et 6 grammes par litre de vermouth.

10. Procédé d'obtention d'une composition de vermouth selon la revendication 7, comprenant en outre l'édulcoration du ou des produits vinicoles mélangés avec le moût de raisin et aromatisés au moyen de sucre caramélisé et/ou de saccharose et/ou de moût de raisin et/ou de moût de raisin concentré rectifié et/ou de moût de raisin concentré.

11. Procédé d'obtention d'une composition de vermouth selon la revendication 7, comprenant en outre la mise en bouteille de la composition de vermouth dans un récipient étanche à l'air.

12. Procédé d'obtention d'une composition de vermouth selon la revendication 11, dans lequel l'opération d'introduction du dioxyde de carbone (CO₂) dans le vermouth est effectuée avant l'opération de mise en bouteille.

13. Procédé d'obtention d'une composition de vermouth selon la revendication 11, dans lequel l'opération d'introduction du dioxyde de carbone (CO₂) dans le vermouth est effectuée pendant l'opération de mise en bouteille.
